# EUROPEAN PATENT SPECIFICATION

(11) **EP 0 540 477 B1**
(45) Date of publication and mention of the grant of the patent: **13.09.1995**
(21) Application number: 92830512.7
(22) Date of filing: 22.09.1992
(51) Int. Cl.: B65B 43/42, B65G 47/14

(54) **Improvements in a container positioning machine**
Verbesserung in einer Behälterpositioniermaschine
Amélioration dans une machine de positionnement de récipients

(30) Priority: 28.10.1991 IT PR910049
(43) Date of publication of application: 05.05.1993
(73) Proprietor: Lanfranchi, Lino, I-43044 Collecchio, Parma (IT)
(72) Inventor: Lanfranchi, Lino, I-43044 Collecchio, Parma (IT)
(74) Representative: Lanzoni, Luciano

(56) References cited:
- EP-A- 0 305 355
- EP-A- 0 374 107
- FR-A- 1 390 960

## Description

The invention relates to improvements in a container positioning machine (see EP-A-0 374 107 for example).

In the field of automatic machines for bottling or filling of containers in general, there already exist positioning machines, or straightening and aligning machines of preferably plastic containers, loaded in bulk in loading hoppers.

The said containers are straightened with the mouth upwards and are arranged in ordered lines on a conveyor belt exiting from the machine.

The positioning machines generally comprise a rotating cylindrical loading hopper, internally equipped with a plurality of variously inclined blades which move solidly with the hopper. The hopper comprises also one or more helicoid-type fixed internal guides, which develop from the bottom of the superior opening of the hopper, susbtantially tangential to the hopper blades. The said guides are made with, for example, a rod distanced from the wall of the hopper in such a way that the containers can be eased between the rod and the wall of the hopper and be transported towards the upper part of the hopper by sliding on the rod and being dragged by the blades.

The prior art positioning machines further comprise a fixed external cylinder, coaxial with the hopper and having a diameter which is superior to it, which forms a hollow space wherein are housed the straightening and aligning means of the containers.

The said machines, however, present some drawbacks, particularly in the case of containers made in plastic material which have an elliptical transversal section or have a shape which includes a larger and a smaller axis. In some cases containers of the above-mentioned types can be crushed between the guide rod and the wall of the rotating hopper, causing blockage and halting the normal functioning of the machine.

A further drawback is that the rising of the containers along the fixed guides can cause folding and damage of the containers themselves, because of rubbing against the guide rods and the rotating wall.

The aim of the present invention is to eliminate the above-mentioned drawbacks by providing a positioning machine which reduces to a minimum the contact and rubbing between the containers and the parts of the machine, and which permits the transporting of the containers towards the straightening and aligning means without crushing or deformation of the containers themselves.

The said aims are fully attained by the improvements in a container positioning machine, object of the present invention, particularly for elliptical transversal-section containers or transversal-section containers having a larger and a smaller axis, of the type comprising:
- a rotating cylindrical hopper wherein containers are bulk-loaded, internally equipped with a conical base to favour the rolling of the containers towards the internal lateral wall of the hopper;
- transporting means to bring the containers, in flatwise position, to the level of the upper edge of the hopper;
- straightening and aligning means of the containers, arranged externally to the hopper in a hollow space between the rotating hopper and a fixed external cylinder coaxial to it,
   characterised by the fact that the transport means for bringing the containers in flatwise position to the level of the upper edge of the hopper where they are delivered to the straightening and aligning means comprise:
- a plurality of pushers or lifters, arranged between the conical base and the internal lateral wall of the hopper, which rotate solidly with the hopper and are vertically mobile from a loading position slightly lower than the conical base to an unloading position slightly above the upper edge of the hopper.

These and other characteristics will better emerge from the following desctiption, of a preferred embodiment illustrated purely in the form of a non-limiting example in the accompanying diagrams, in which:
- Figure 1 shows the improvements of the invention in a partially-sectioned frontal view;
- Figure 2 shows the profile of a cam which forms a part of the said improvements;
- Figure 3 shows a particular of the machine in section on a horizontal plane.

With reference to the drawings, 1 denotes a lateral wall of a rotating cylindrical hopper which rotates about its own vertical central axis 12. The movement means of the hopper are of known type and not illustrated.

Containers 6 are bulkloaded into the hopper which containers 6 have preferably an elliptical transversal section or a section having one larger and one smaller axis.

At the bottom of the hopper there is a fixed conical base 2 which favours the rolling of the containers 6 towards the wall 1 of the hopper where they are collected by pushers or lifters 3.

Below the conical base 2 an annular structure 11 is envisaged, which rotates about the same rotation axis as the hopper and from which project several arms 4 in a dial arrangement. The annular structure 11 is moved by motor means of known type and not illustrated, which are the same means that move the hopper.

Each arm 4 is hinged at one end to the annular structure 11 and at the other end to a connecting rod 5, which connecting rod 5 is in its turn hinged to an end of a pusher 3, which constitutes a means of transport to bring the containers, in flatwise position, to the level of the superior edge of the hopper.

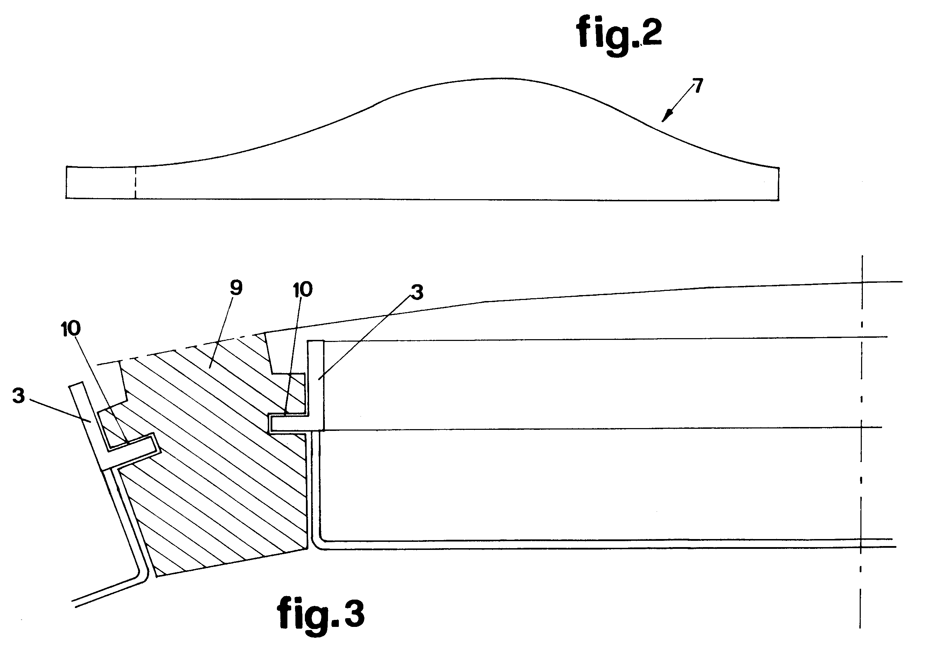

Each arm 4 is equipped with a roller 8 which runs on a cam 7 constituted substantially by a shaped ring whose profile, illustrated in figure 2, when run along by the rollers 8, causes the lifting and lowering of the arms 4 and the relative pushers or lifters 3.

The cam 7, according to a possible further embodiment (not illustrated), could be constituted by an annular channel, with the rollers running inside it.

A spring 13, which connects the arm to a frame having its base 14 solid with the rotating hopper, maintains contact between the roller 8 and the cam 7.

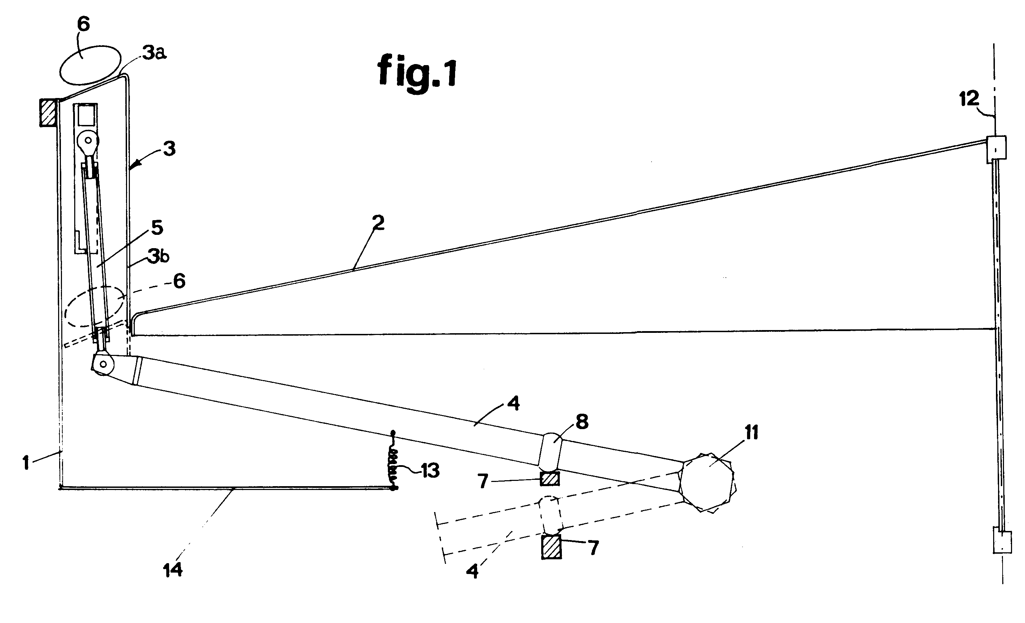

More precisely, the pushers or lifters 3, arranged between the conical base 2 and the internal lateral wall of the hopper, are vertically mobile from a loading position (indicated by the broken) line in figure 1), slightly lower than the conical base 2, to an unloading position of the containers, slightly above the upper edge of the hopper.

9 denotes a plurality of sections, applied to the internal wall of the hopper and equipped laterally with guide channels 10 in which the pushers 3 run vertically.

The arms 4, with the annular structure 11, the rollers 8, the cam 7 and the connecting rods 5, constitute activating means for the pushers 3.

The pushers 3 rotate solidly with the hopper and slide vertically, activated by the arms 4.

Each pusher 3 is essentially constituted by a box element having an upturned-"L"-shaped vertical section, wherein the vertical and horizontal tract of the "L" form an acute angle between themselves.

The containers, bulk-loaded into the rotating hopper, roll towards the internal lateral wall of the hopper both by means of the centrifugal effect and because of the tilt of the conical base 2.

In proximity to the walls the containers come to rest on the upper surface 3a of a pusher 3 which is in loading position, or otherwise the containers stop against the lateral wall 3b of the pusher 3 if the latter is already in its lifting phase, that is moving towards the upper edge of the hopper.

When the containers have been carried by the pushers up to the level of the upper unloading zone, they are received by straightening and aligning means of known type and not illustrated, arranged externally to the hopper in a space comprised between the rotating hopper and a fixed cylinder, external and coaxial to the hopper.

To favour the rolling of the containers towards the straightening and aligning means, in addition to the upper tilted edge 3a of the elevator, bars or fixed guides could be envisaged (not illustrated), solid to the non-rotating frame of the machine, which bars or guides would direct the containers during the unloading phase.

The original use of the pushers instead of the traditional blades with fixed helicoid guides permits of avoiding crushing and deformation of the containers, and furthermore affords a more delicate treatment of the said containers, which do not suffer from rubbing against the fixed guides.

## Claims

1. Improvements in a container positioning machine particularly for elliptical transversal-section containers (6) or transversal-section containers having a larger and a smaller axis, of the type comprising:
- a rotating cylindrical hopper wherein containers (6) are bulk-loaded, internally equipped with a conical base (2) to favour the rolling of the containers (6) towards an internal lateral wall (1) of the hopper;
- transporting means to bring the containers, in flatwise position, to the level of the upper edge of the hopper;
- straightening and aligning means of the containers, arranged externally to the hopper in a hollow space between the rotating hopper and a fixed external cylinder coaxial to it,
characterised by the fact that the transport means for bringing the containers in flatwise position to the level of the upper edge of the hopper where they are delivered to the straightening and aligning means comprise:
- a plurality of pushers or lifters (3), arranged between the conical base (2) and the internal lateral wall (1) of the hopper, which rotate solidly with the hopper and are vertically mobile from a loading position slightly lower than the conical base to an unloading position slightly above the upper edge of the hopper;
- activating means for the pushers.

2. Improvements according to claim 1, characterised by the fact that the activating means of the pushers comprise:
- a plurality of arms (4), one for each said pusher or lifter (3), arranged in a dial formation and rotating solidly with a common motorised support structure (11), each arm (4) being equipped with a roller (8);
- a fixed cam (7), arranged at the base of the hopper, on which the rollers (8) on the arms (4) run, the profile causing a lifting and lowering of the said arms (4);
- a plurality of connecting rods (5), one for each arm (4), pivoted on one end to the said arm (4) and on another end to the relative pusher or lifter (3).

3. Improvements according to claim 1, characterised by the fact that the pushers or lifters (3) are constituted by vertical-section upturned-"L"-shaped box elements, wherein the vertical and horizontal tracts of the said "L" form an acute angle between themselves.

4. Improvements according to claim 1, characterised by the fact that they comprise a plurality of sections (9), equal in number to the pushers (3), applied equidistantly between themselves on the internal lateral wall (1) of the rotating hopper and laterally equipped with guide and sliding channels (10) for the said pushers or elevators (3).

## Patentansprüche

1. Verbesserung einer Behälterpositioniermaschine, insbesondere für Behälter (8) mit elliptischem Querschnitt oder mit einem Querschnitt mit einer längeren und einer kürzeren Achse, dadurch gekennzeichnet, daß sie umfasst:
- einen rotierenden zylindrischen Trichter, in den die Behälter (6) eingeschüttet werden und der im Innern eine konische Basis (2) aufweist, um das Rollen der Behälter (6) zur der inneren Seitenwand (1) des Trichters zu vereinfachen;
- eine Transportvorrichtung, um die Behälter in flacher Position an den oberen Rand des Trichters zu bringen;
- eine Vorrichtung zum Ausrichten der Behälter, die sich außerhalb des Trichters in einem Hohlraum zwischen dem rotierenden Trichter und einem dazu koaxialen feststehenden äußeren Zylinder befindet,
gekennzeichnet durch die Tatsache, daß die Transportvorrichtung die Behälter in flacher Position zum oberen Rand des Trichters bringt, wo diese an die Vorrichtung zum Ausrichten übergeben werden; diese umfaßt:
- eine Vielzahl von Mitnehmern und Aufnehmern (3), die zwischen der konischen Basis (2) und der inneren Seitenwand (1) des Trichter angebracht sind, sich fest mit dem Trichter drehen und die sich in vertikaler Richtung aus einer Ladeposition leicht unterhalb der konischen Basis in eine Entladeposition leicht oberhalb der oberen Kante des Trichters bewegen können;
- eine Vorrichtung zum Antrieb der Mitnehmer.

2. Verbesserung gemäß Anspruch 1, gekennzeichnet durch die Tatsache, daß die Vorrichtung zum Antrieb der Mitnehmer umfaßt:
- eine Vielzahl von Armen (4), einer für jeden Mitnehmer oder Aufnehmer (3), die kreisförmig angebracht sind und sich fest mit einer gemeinsamen angetriebenen Halterungsstruktur (11) bewegen, wobei jeder Arm (4) mit einer Rolle (8) ausgestattet ist;
- eine feststehende Nocke (7), die an der Basis des Trichters angebracht ist und auf der die Rollen (8) auf den Armen (4) laufen, wobei das Profil das Anheben und Absenken der genannten Arme (4) bewirkt;
- eine Vielzahl von Verbindungsstäben (5), einer für jeden Arm (4), die an einem Ende an dem genannten Arm (4) und am anderen Ende an dem Mitnehmer oder Aufnehmer (3) gelagert sind.

3. Verbesserung gemäß Anspruch 1, gekennzeichnet durch die Tatsache, daß die Mitnehmer oder Aufnehmer (3) aus Schachtelelementen in Form eines aufrechten "L" bestehen und wobei der vertikale und der horizontale Abschnitt dieses "L" einen spitzen Winkel bilden.

4. Verbesserung gemäß Anspruch 1, gekennzeichnet durch die Tatsache, daß sie eine Vielzahl von Abschnitten (9) von gleicher Anzahl, wie die der Mitnehmer (3) umfaßt und die im gleichen Abstand zueinander an der inneren Seitenwand (1) des rotierenden Zylinders angebracht sind und seitlich eine Führung und Gleitkanäle (10) für die genannten Mitnehmer oder Aufnehmer (3) aufweisen.

## Revendications

1. Des améliorations dans une machine de positionnement de récipients, particulièrement utiles pour des récipients (6) à section transversale elliptique ou pour des récipients à section transversale ayant un axe plus grand et un axe plus petit, du type qui comprend:
- une trémie cylindrique tournante dans laquelle les récipients (6) sont chargés en vrac, équipée, à l'intérieur, d'une base conique (2) destinée à faciliter le roulement des récipients (6) vers une paroi latérale intérieure (1) de la trémie;
- des moyens de transport pour apporter les récipients, en position presque horizontale, jusqu'au niveau du bord supérieur de la trémie;
- des moyens servant à redresser et à aligner les récipients, disposés à l'extérieur de la trémie dans un espace creux qui se trouve entre la trémie tournante et un cylindre extérieur fixe et coaxial par rapport à celle-ci, caractérisées par le fait que les moyens de transport destinés à apporter les récipients en position presque horizontale jusqu'au niveau du bord supérieur de la trémie où ils sont transférés aux moyens destinés à les redresser et à les aligner comprennent:
- une pluralité de poussoirs ou d'élévateurs (3), disposés entre la base conique (2) et la paroi latérale intérieure (1) de la trémie, qui tournent solidairement avec la trémie et qui sont mobiles verticalement à partir d'une position de chargement légèrement plus basse que la base conique jusqu'à une position de déchargement légèrement au-dessus du bord supérieur de la trémie;
- des moyens d'actionnement pour les poussoirs.

2. Des améliorations conformément à la revendication 1, caractérisées par le fait que les moyens d'actionnement des poussoirs comprennent:
- une pluralité de bras (4), un pour chacun desdits poussoirs ou élévateur (3), qui sont disposés en une formation à cadran et qui tournent solidairement avec une structure de support commune motorisée (11), chaque bras (4) étant équipé d'un rouleau (8);
- une came fixe (7), disposée à la base de la trémie, sur laquelle courent les rouleaux (8) qui se trouvent sur les bras (4), sa forme provoquant le levage et l'abaissement desdits bras (4);
- un pluralité de bielles (5), une pour chaque bras (4), chacune étant montée sur pivot, à une extrémité sur ledit bras (4), et à l'autre extrémité sur le poussoir ou élévateur relatif (3).

3. Des améliorations conformément à la revendication 1, caractérisées par le fait que les poussoirs ou élévateurs (3) sont constitués par des éléments servant de bacs qui ont la forme d'un "L" renversé vers le haut, à section verticale, dans lesquels la partie verticale et la partie horizontale dudit "L" forment entre elles un angle aigu.

4. Des améliorations conformément à la revendication 1, caractérisées par le fait qu'elles comprennent une pluralité de sections (9), dont le nombre est égal à celui des poussoirs (3), qui sont appliquées à une distance égale les unes des autres sur la paroi latérale intérieure (1) de la trémie tournante et qui sont équipées latéralement de rainures (10) servant à guider et à faire glisser lesdits poussoirs ou élévateurs (3).
